# EUROPEAN PATENT APPLICATION

(11) **EP 4 660 154 A1**
(43) Date of publication of application: **10.12.2025**
(21) Application number: 24179598.8
(22) Date of filing: 03.06.2024
(51) Int. Cl.: C02F 1/461, C02F 1/469, C02F 1/66, C02F 1/20, C02F 1/44, C02F 1/38, C02F 5/08, C02F 103/36, C02F 103/10, C02F 103/08, C02F 101/34, C02F 101/32, C02F 1/24

(54) **TREATMENT OF PRODUCED WATER FROM OIL OR GAS FIELDS**

(71) Applicant: Shell Internationale Research Maatschappij B.V., 2596 HR The Hague (NL)
(72) Inventor: VAN ELK, Hendricus Cornelis Adrianus, 2596 HR The Hague (NL); GROENENDIJK, Dirk Jan, 1031 HW Amsterdam (NL); IN `T VEEN, Bernardus Cornelis Maria, 1031 HW Amsterdam (NL); WEBB, Philip John Charles, Aberdeen AB11 6DB (GB)
(74) Representative: Shell Legal Services IP

(57) **Abstract**

This invention provides processes for reducing the concentration of water-soluble organic compounds in produced water comprising:
i) Acidifying a mixture of produced water and crude oil with a mineral acid to obtain a mixture of a first aqueous phase and crude oil; and
ii) Separating the mixture of the first aqueous phase and the crude oil to produce a second aqueous phase and a crude oil phase;

wherein the produced water comprises a higher concentration of water-soluble organic compounds than the second aqueous phase; and
wherein the mineral acid used in step i) is obtained by bipolar membrane electrodialysis of a third aqueous phase.

## Description

### Field of the Invention

This invention relates to processes for the treatment of produced water from oil or gas fields. The claimed process is useful for reducing the concentration of water-soluble organic compounds in produced water, breaking emulsions in mixtures of produced water and crude oil, and/or reducing or preventing the deposit of organic scale due to calcium naphthenates and/or sodium naphthenates in mixtures of produced water and crude oil.

### Background of the invention

Produced water is the wastewater formed when water is brought from subsurface reservoirs during oil or gas extraction, i.e. from an oil field ("oil field produced water") or from a gas field ("gas field produced water"). This effluent has a complex and variable chemical composition; it contains a significant amount of water-soluble organic compounds. The concentration of water-soluble organic compounds in produced water can range from 10 mg L⁻¹ to 1000 mg L⁻¹ (typically from 50 mg L⁻¹ to 200 mg L⁻¹). It is important to minimise the concentration of water-soluble organic compounds in produced water before it is discharged, in view of both public health and the environmental impact.

The concentration of water-soluble organic compounds in produced water is most commonly reduced by acid treatment of the produced water. Namely, the pH of produced water in a mixture of produced water and oil is reduced by the addition of an acid. Reducing the pH of the produced water forces the carboxylic acids into the free acid (i.e. not ionised) form, which then partition into the oil phase. Acids are used to reduce the pH of produced water for this purpose, as well as various proprietary acid blends that contain buffering agents.

Mixtures of produced water and crude oil may also contain calcium naphthenates and/or sodium naphthenates. Calcium naphthenates and sodium naphthenates are salts formed when naphthenic acid reacts with calcium or sodium, respectively. These compounds can cause operational challenges, such as the formation of organic scale. Furthermore, calcium naphthenates and sodium naphthenates (along with other surfactants) can result in the formation of stable emulsions in mixtures of produced water and crude oil. These stable emulsions are difficult to break, leading to production issues (e.g. difficulties in achieving product specification).

Acidic demulsifiers are chemicals used in the oil industry to separate water from water in oil emulsions. These demulsifiers work by neutralizing the charges that stabilize the emulsion, allowing the water and oil phases to separate. They are particularly useful in treating emulsions stabilized by compounds like calcium naphthenates and sodium naphthenates. Likewise, acidic additives can be used to prevent the deposit of organic scale due to calcium naphthenates and sodium naphthenates.

A major disadvantage of these processes is that they require the transport and storage of large quantities of corrosive and potentially hazardous chemicals, which is both economically and environmentally unfavourable. This is especially problematic when the produced water is generated offshore for oil and gas offshore production systems.

There therefore exists a need for alternative processes for the treatment of produced water to reduce the concentration of water-soluble organic compounds; to break emulsions caused by surfactants such as calcium naphthenates and/or sodium naphthenates; and/or to reduce or prevent organic scale caused by calcium naphthenates and/or sodium naphthenates.

### Summary of the Invention

An aspect of the invention provides a process for reducing the concentration of water-soluble organic compounds in produced water comprising:
i) Acidifying a mixture of produced water and crude oil with a mineral acid to obtain a mixture of a first aqueous phase and crude oil; and
ii) Separating the mixture of the first aqueous phase and the crude oil to produce a second aqueous phase and a crude oil phase;

wherein the produced water comprises a higher concentration of water-soluble organic compounds than the second aqueous phase; and
wherein the mineral acid used in step i) comprises mineral acid obtained by bipolar membrane electrodialysis of a third aqueous phase.

### Brief Description of the Drawings

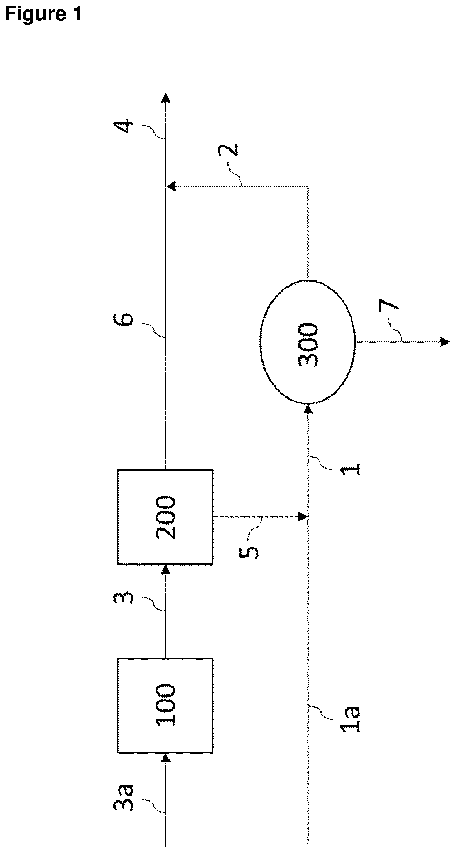

Figure 1 illustrates an example system for use in reducing the concentration of water-soluble organic compounds in produced water.

### Detailed Description of the Invention

In general terms the present invention provides a process for reducing the concentration of water-soluble organic compounds in produced water.

For the purposes of promoting an understanding of the principles of the invention, embodiments of the invention are described in more detail below. The embodiments disclosed herein are not intended to be exhaustive or limit the invention to the precise form disclosed in the following detailed description. The invention includes any alterations and further modifications in the illustrated devices and described methods and further applications of the principles of the invention as set forth in the claims.

In an aspect, the invention provides a process for reducing the concentration of water-soluble organic compounds in produced water comprising:
i) Acidifying a mixture of produced water and crude oil with a mineral acid to obtain a mixture of a first aqueous phase and crude oil; and
ii) Separating the mixture of the first aqueous phase and the crude oil to produce a second aqueous phase and a crude oil phase;

wherein the produced water comprises a higher concentration of water-soluble organic compounds than the second aqueous phase; and
wherein the mineral acid used in step i) comprises (or is) mineral acid obtained by bipolar membrane electrodialysis of a third aqueous phase.
The term "crude oil" as used herein refers to a naturally occurring, unrefined petroleum product composed of hydrocarbon deposits and other organic materials, which can include hydrocarbon condensate produced from natural gas fields.
The term "hydrocarbon condensate" as used herein refers to a liquid hydrocarbon produced from a natural gas field, typically consisting of a mixture of hydrocarbons that may exist as a liquid or in gaseous form underground, but condense into liquid when brought to the surface.

In an embodiment, the produced water is oil field produced water. In an embodiment, the produced water is gas field produced water.

In an embodiment, the process also breaks an emulsion formed due to the presence of calcium naphthenates and/or sodium naphthenates in the mixture of produced water and crude oil. In an embodiment, the process breaks an emulsion formed due to the presence of calcium naphthenates in the mixture of produced water and crude oil. In an embodiment, the process breaks an emulsion formed due to the presence of sodium naphthenates in the mixture of produced water and crude oil. In an embodiment, the process reduces or prevents the deposit of organic scale due to calcium naphthenates and/or sodium naphthenates in the mixture of produced water and crude oil. In an embodiment, the process reduces the deposit of organic scale due to calcium naphthenates and/or sodium naphthenates in the mixture of produced water and crude oil. In an embodiment, the process prevents the deposit of organic scale due to calcium naphthenates and/or sodium naphthenates in the mixture of produced water and crude oil. In an embodiment, the process reduces or prevents the deposit of organic scale due to calcium naphthenates in the mixture of produced water and crude oil. In an embodiment, the process reduces the deposit of organic scale due to calcium naphthenates in the mixture of produced water and crude oil. In an embodiment, the process prevents the deposit of organic scale due to calcium naphthenates in the mixture of produced water and crude oil. In an embodiment, the process reduces or prevents the deposit of organic scale due to sodium naphthenates in the mixture produced water and crude oil. In an embodiment, the process reduces the deposit of organic scale due to sodium naphthenates in the mixture of produced water and crude oil. In an embodiment, the process prevents the deposit of organic scale due to sodium naphthenates in the mixture of produced water and crude oil.

In an embodiment, the bipolar membrane electrodialysis of the third aqueous phase is performed at the same location of as where the mixture of produced water and crude oil is produced. For example, if the mixture of produced water and crude oil is generated at an offshore oil processing facility, then the bipolar membrane electrodialysis of the third aqueous phase is performed at said offshore oil processing facility.

In an embodiment, the third aqueous phase is, or comprises, or is obtained from, a water source containing minerals (e.g. the third aqueous phase is, or comprises, or is obtained from, seawater, a lake, a reservoir brine/aquifer or produced water). In an embodiment, the third aqueous phase is, or comprises, or is obtained from, seawater. In an embodiment, the third aqueous phase is, or is obtained from, seawater.

In an embodiment, the process further comprises adding a base (such as sodium hydroxide) to the second aqueous phase to obtain a fourth aqueous phase.

In an embodiment, the process comprises:
a) Separating a feed of the third aqueous phase into at least an acidic stream and a basic stream using bipolar membrane electrodialysis;
b) Acidifying the mixture of produced water and crude oil with a mineral acid to obtain the mixture of a first aqueous phase and crude oil, wherein the mineral acid comprises (or is) at least a portion of the acidic stream generated in step a);
c) Separating the mixture of the first aqueous phase and crude oil to produce a second aqueous phase and a crude oil phase; and
d) Adding a base to the second aqueous phase to obtain the fourth aqueous phase, wherein the base comprises (or is) at least a portion of the basic stream generated in step a).

In an embodiment, the process comprises:
e) Separating a feed of the third aqueous phase into at least an acidic stream and a basic stream using bipolar membrane electrodialysis;
f) Adding the acidic stream from step a) to the mixture of produced water and crude oil to obtain the mixture of a first aqueous phase and crude oil;
g) Separating the mixture of the first aqueous phase and crude oil to produce a second aqueous phase and a crude oil phase; and
h) Adding the basic stream obtained in step a) to the second aqueous phase to obtain the fourth aqueous phase.

In an embodiment, the third aqueous phase is obtained by the treatment of water to reduce the concentration of divalent cations, for example to reduce the concentration of calcium and/or magnesium ions in the third aqueous phase.

In an embodiment, the third aqueous phase is obtained by nanofiltration of an aqueous phase which contains minerals (e.g. seawater, or water from a lake or a reservoir brine/aquifer). In an embodiment, the third aqueous phase is obtained from seawater. Typically, in order to obtain the third aqueous phase from seawater, solids are removed from the seawater (e.g. using a cartridge filter or ultrafiltration), oxygen is removed from the seawater (e.g. using a deaerator) and then the seawater is subjected to nanofiltration.

In an embodiment, the bipolar membrane electrodialysis is performed using a two-chamber bipolar membrane electrodialysis configuration (e.g. an anion-exchange membrane/bipolar membrane, or AEM/BPM, configuration) or a three-chamber bipolar membrane electrodialysis configuration (e.g. an anion-exchange membrane/cation-exchange membrane/bipolar membrane, or AEM/CEM/BPM, configuration). In an embodiment, the bipolar membrane electrodialysis is performed using a two-chamber bipolar membrane electrodialysis configuration (e.g. an anion-exchange membrane/bipolar membrane, or AEM/BPM, configuration).

When the bipolar membrane electrodialysis is performed using a two-chamber bipolar membrane electrodialysis configuration (e.g. an anion-exchange membrane/bipolar membrane, or AEM/BPM, configuration), the third aqueous phase is split into an acidic stream and a basic stream.

When the bipolar membrane electrodialysis is performed using a three-chamber bipolar membrane electrodialysis configuration (e.g. an anion-exchange membrane/cation-exchange membrane/bipolar membrane, or AEM/CEM/BPM, configuration), the third aqueous phase is split into an acid stream, a basic stream and a stream that is depleted of ions. The basic stream used in steps d) and h) described above The basic stream and the stream depleted of ions may refer to either the basic stream alone or a combination of the basic stream and the stream that is depleted of ions.

In an embodiment, the composition of the basic stream obtained from bipolar membrane electrodialysis of the third aqueous phase is maintained such that any calcium and/or magnesium ions remain in solution.

In embodiments, scale inhibitor is added to the third aqueous phase prior to bipolar membrane electrodialysis.

In embodiments, the first aqueous phase has a pH of less than 7.0, for example 6.0 or less. In certain embodiments, if the process includes breaking an emulsion in the mixture of produced water and crude oil (e.g. stabilised by the presence of calcium naphthenates or sodium naphthenates), and/or reducing or preventing the deposit of organic scale due to calcium naphthenates and/or sodium naphthenates in the mixture of produced water and crude oil, then the pH of the first aqueous phase may be between 4.0 and 7.0 (e.g. between 4.0 and 6.0).

In embodiments, the fourth aqueous phase has a pH between 6.0 and 8.0.

In embodiments, the second aqueous phase is subjected to further treatment before the base is added. For example, the second aqueous phase may be treated using deoiling hydrocyclones and/or induced gas flotation.

In a second aspect, the invention provides a system for reducing the concentration of water-soluble organic compounds in produced water, the system comprising:
- A separation unit which can be used to separate a mixture of a first aqueous phase and a crude oil phase; and
- A bipolar membrane electrodialysis unit comprising an inlet for a third aqueous phase and at least an outlet for a mineral acid;
   wherein the system is arranged such that the mineral acid from the bipolar membrane electrodialysis unit is used to acidify the mixture of produced water and crude oil to obtain the mixture of a first aqueous phase and crude oil.

In embodiments, the mineral acid obtained from the bipolar electrodialysis unit can be used acidify the mixture of produced water and crude oil either alone or together with other components (e.g. a further mineral acid).

In embodiments, the system may be arranged so that the acidification of the mixture of produced water and crude oil occurs before the mixture enters the separation unit, or when the mixture of produced water and crude oil is in the separation unit.

In an embodiment, the bipolar membrane electrodialysis unit has a two-chamber bipolar membrane electrodialysis configuration (e.g. an anion-exchange membrane/bipolar membrane, or AEM/BPM, configuration) or a three-chamber bipolar membrane electrodialysis configuration( e.g. an anion-exchange membrane/cation-exchange membrane/bipolar membrane, or AEM/CEM/BPM, configuration). In an embodiment, the bipolar membrane electrodialysis unit has a two-chamber bipolar membrane electrodialysis configuration (e.g. an anion-exchange membrane/bipolar membrane, or AEM/BPM, configuration).

When the bipolar membrane electrodialysis unit has a two-chamber bipolar membrane electrodialysis configuration (e.g. an anion-exchange membrane/bipolar membrane, or AEM/BPM, configuration), the unit has two outlets: one for a mineral acid stream; and one for mineral base.

When the bipolar membrane electrodialysis unit has a three-chamber bipolar membrane electrodialysis configuration (e.g. an anion-exchange membrane/cation-exchange membrane/bipolar membrane, or AEM/CEM/BPM, configuration), the unit has three outlets: one for a mineral acid; one for a mineral base; and one for a stream that is depleted of ions.

In embodiments, the system is arranged such that the mineral base obtained from the bipolar electrodialysis unit can be used to increase the pH of the aqueous phase obtained from the separation unit. In embodiments, the mineral base obtained from the bipolar electrodialysis unit can be used to increase the pH of the aqueous phase obtained from the separation unit either alone or together with other components (e.g. a further mineral base or the stream that is depleted of ions when the unit has a three-chamber configuration).

In embodiments wherein the bipolar membrane electrodialysis unit has a two-chamber bipolar membrane electrodialysis configuration (e.g. an anion-exchange membrane/bipolar membrane, or AEM/BPM, configuration), the system may be arranged such that the mineral base obtained from the bipolar electrodialysis unit can be used to increase the pH of the aqueous phase obtained from the separation unit.In embodiments, the mineral base obtained from the bipolar electrodialysis unit can be used to increase the pH of the aqueous phase obtained from the separation unit either alone or together with other components (e.g. a further mineral base).

In embodiments wherein the bipolar membrane electrodialysis unit has a three-chamber bipolar membrane electrodialysis configuration (e.g. an anion-exchange membrane/cation-exchange membrane/bipolar membrane, or AEM/CEM/BPM, configuration), the system may be arranged such that the mineral base obtained from the bipolar electrodialysis unit can be used to increase the pH of the aqueous phase obtained from the separation unit. In embodiments, the mineral base obtained from the bipolar electrodialysis unit can be used to increase the pH of the aqueous phase obtained from the separation unit either alone or together with other components (e.g. a further mineral base or the stream that is depleted of ions).

In an embodiment, the third aqueous phase is, or comprises, or is obtained from, a water source containing minerals (e.g. the third aqueous phase is, or comprises, or is obtained from, seawater, a lake, a reservoir brine/aquifer or produced water). For example, minerals may include ions such as Na⁺, K⁺, Mg²⁺, Ca²⁺, Cl⁻, HCO₃⁻, SO₄²⁻. In an embodiment, the third aqueous phase is, or comprises, or is obtained from, seawater. In an embodiment, the third aqueous phase is, or is obtained from, seawater.

It may be desirable to minimise any divalent ions (such as calcium and/or magnesium ions) in the third aqueous phase. Thus, in embodiments, the system further comprises a nanofiltration unit upstream of the bipolar membrane electrodialysis unit.

The invention will now be further illustrated by reference to the following non-limiting example.

### Example

Figure 1 illustrates an example system for use in reducing the concentration of water-soluble organic compounds in produced water. The system comprises a nanofiltration unit (100), a bipolar membrane electrodialysis unit (200), and a separation unit (300).

In the system, an aqueous phase (3a; seawater which has been filtered and from which oxygen has been removed, for example) is passed through the nanofiltration unit 100 to generate a third aqueous phase (3). The third aqueous phase (3) is passed through the bipolar membrane electrodialysis unit (200) to generate a mineral acid (5) and a base (6).

A mixture (1a) of produced water and crude oil is sent to a separation unit (300). This mixture (1a) is acidified using at least some of the mineral acid (5) generated by the bipolar membrane electrodialysis unit (200), generating a mixture (1) of a first aqueous phase and crude oil. Although the figure suggests that the acidification takes place before the mixture (1a) enters the separation unit (300), acidification may take place either before the mixture (1a) enters the separation unit (300), or once the mixture (1a) is in the separation unit (300) .

The mixture (1a) of the first aqueous phase and the crude oil is then separated to provide a second aqueous phase (2) and a crude oil phase (7). The base (6) generated by the bipolar membrane electrodialysis unit (200) is at least partially combined with the second aqueous phase (2), producing a fourth aqueous phase (4).

## Claims

1. A process for reducing the concentration of water-soluble organic compounds in produced water comprising:
i) Acidifying a mixture of produced water and crude oil with a mineral acid to obtain a mixture of a first aqueous phase and crude oil; and
ii) Separating the mixture of the first aqueous phase and the crude oil to produce a second aqueous phase and a crude oil phase;
wherein the produced water comprises a higher concentration of water-soluble organic compounds than the second aqueous phase; and
wherein the mineral acid used in step i) comprises mineral acid obtained by bipolar membrane electrodialysis of a third aqueous phase.

2. The process according to claim 1 wherein the produced water is oil field produced water or gas field produced water.

3. The process according to claim 1 or claim 2 wherein the bipolar membrane electrodialysis of the third aqueous phase is performed at the same location as where the mixture of produced water and crude oil is generated.

4. The process according to any of claims 1 to 3 wherein the process breaks an emulsion in the mixture of produced water and crude oil (e.g. due to the presence of calcium naphthenates or sodium naphthenates); and/or the process reduces or prevents the deposit of organic scale due to calcium naphthenates and/or sodium naphthenates in the mixture of produced water and crude oil.

5. The process according to any one of claims 1 to 4 wherein the third aqueous phase is, or is obtained from, seawater.

6. The process according to any one of claims 1 to 5 further comprising adding a base to the second aqueous phase to obtain a fourth aqueous phase.

7. The process according to claim 6 comprising:
a) Separating a feed of the third aqueous phase into at least an acidic stream and a basic stream using bipolar membrane electrodialysis;
b) Acidifying the mixture of produced water and crude oil with a mineral acid to obtain the mixture of a first aqueous phase and crude oil, wherein the mineral acid comprises (or is) at least a portion of the acidic stream generated in step a);
c) Separating the mixture of the first aqueous phase and crude oil to produce a second aqueous phase and a crude oil phase; and
d) Adding a base to the second aqueous phase to obtain the fourth aqueous phase, wherein the base comprises (or is) at least a portion of the basic stream generated in step a).

8. The process of any one of claims 1 to 7 wherein the third aqueous phase is obtained by the treatment of water to reduce the concentration of divalent cations (e.g. calcium and/or magnesium ions).

9. The process according to any one of claims 1 to 8 wherein the third aqueous phase is seawater which has been treated by ultrafiltration, oxygen removal and nanofiltration.

10. The process according to any one of claims 1 to 9 wherein the bipolar membrane electrodialysis is performed using a two-chamber bipolar membrane electrodialysis configuration or a three-chamber bipolar membrane electrodialysis configuration.

11. The process according to any one of claims 1 to 10 wherein the composition of the basic stream obtained from bipolar membrane electrodialysis of the third aqueous phase is maintained such that any calcium and/or magnesium ions remain in solution.

12. The process according to any one of claims 1 to 11 wherein scale inhibitor is added to the third aqueous phase prior to bipolar membrane electrodialysis.

13. The process according to any one of claims 1 to 12 wherein the first aqueous phase has a pH of 6.0 or less.

14. The process according to any one of claims 5 to 13 wherein the fourth aqueous phase has a pH between 6.0 and 8.0.

15. The process according to any one of claims 6 to 14 wherein the second aqueous phase is subjected to further treatment before the base is added.
